(19) Europäisches Patentamt
European Patent Office
Office européen des brevets

(11) **EP 3 115 763 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
***G01M 3/00*** *(2006.01)*

(21) Anmeldenummer: **16176218.2**

(22) Anmeldetag: **24.06.2016**

(54) **ZUSTANDSÜBERWACHUNG EINES ELEKTROMECHANISCHEN AKTORS**

MONITORING THE CONDITION OF AN ELECTROMECHANICAL ACTUATOR

SURVEILLANCE D'ÉTAT D'UN ACTIONNEUR ÉLECTROMÉCANIQUE

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR** | (72) Erfinder: **van der Linden, Franciscus**<br>**81375 München (DE)** |
| (30) Priorität: **06.07.2015 DE 102015110856** | (74) Vertreter: **Rösler, Frank**<br>**Rösler · Rasch · van der Heide & Partner**<br>**Patent- und Rechtsanwälte PartG mbB**<br>**Bodenseestraße 18**<br>**81241 München (DE)** |
| (43) Veröffentlichungstag der Anmeldung:<br>**11.01.2017 Patentblatt 2017/02** | |
| (73) Patentinhaber: **Deutsches Zentrum für Luft- und Raumfahrt e.V.**<br>**51147 Köln (DE)** | (56) Entgegenhaltungen:<br>**DE-A1- 10 355 250   US-A- 5 744 701** |

**Beschreibung**

Die Erfindung betrifft ein Verfahren und eine Vorrichtung zur Überwachung eines elektromechanischen Aktors, mittels dem ein Arbeitskolben verfahrbar ist. Weiterhin betrifft die Erfindung ein Fahrzeug insbesondere ein Luftfahrzeug, ein Kraftfahrzeug, ein Wasserfahrzeug, ein Raumfahrzeug, ein Schienenfahrzeug mit einer ebensolchen Vorrichtung, sowie ein Computer-Programm-Produkt, ein Computersystem, ein digitales Speichermedium und ein Computer-Programm.

Da in vielen Anwendungen ein Ausfall eines solchen Aktors zu sicherheitsrelevanten Problemen führen kann, wie bspw. in der Luftfahrt, ist ein möglichst frühzeitiges Erkennen von sich ankündigenden Fehlern im Aktor, sogenanntes "Health Monitoring", erforderlich.

Hierzu ist bspw. bekannt, mittels Beschleunigungssensoren mechanische Schwingungen des Aktors zu erfassen und hinsichtlich sich ankündigender Fehler auszuwerten.

Aus der DE 103 552 50 A1 ist ein Verfahren sowie eine Vorrichtung zur Leckagestrom-Ermittlung für einen Arbeitskolben bekannt. Dabei erfasst ein in einer Zuführungsleitung zu einem Druckraum des Arbeitskolbens angeordneter Drucksensor den Druck des darin geführten Druckmediums. Weiterhin erfasst ein in dieser Zuführungsleitung angeordneter Volumenstromsensor den Volumenstrom des durch die Zuführungsleitung strömenden Druckmediums. Darüber hinaus wird ein Positionssignal für den Arbeitszylinder ermittelt. Der Leckagestrom wird somit basierend auf den Größen: Druck, Volumenstrom und Position ermittelt.

Aus der US 5,744,701 A ist ein elektronischer Leck-Detektor für Flüssigkeiten bekannt, bei dem eine Leckage auf Basis eines gemessenen Flüssigkeitsstands ermittelt wird.

Die Aufgabe der Erfindung ist es, ein Verfahren und eine Vorrichtung anzugeben mit der eine Fehlererkennung bei einem elektromechanischen Aktor zuverlässiger und genauer möglich ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein Verfahren zur Zustandsüberwachung eines elektromechanischen Aktors, der einen elektrischen Antrieb aufweist, mittels dem ein Arbeitskolben verfahrbar ist, wobei das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

mit

$$(2) \qquad V_{Zyl}(t) < V_{Akt,max},$$

mit

$V_{Akt,max}$: maximales Aktorinnenvolumen
$V_{Zyl}(t)$: Volumen $V_{Zyl}(t)$ des aktuell in das maximale Aktorinnenvolumen $V_{Akt,max}$ ragenden Teils des Arbeitskolbens.

Der Begriff "elektromechanischer Aktor" ist vorliegend breit auszulegen. Er umfasst vorliegend einen elektrischen Antrieb, d.h. einen Antrieb, einen Piezomotor oder einen Linearmotor, als Abtrieb einen verfahrbaren Arbeitskolben und optional ein zwischen Antrieb und Arbeitskolben geschaltetes Kopplungsglied (bspw. ein Getriebe) mit einem Übersetzungsverhältnis, über das Bewegungen des Antriebs auf den Arbeitskolben vermittelt werden. Zudem sind sämtliche zugehörige Aktor-Komponenten, wie bspw. Kugellager, Dichtungen, etc. umfasst. Wesentlich ist, dass ein Verfahren des Arbeitskolbens das Aktorinnenvolumen $V_{Akt}(t)$ des Aktors ändert.

Das maximale Aktorinnenvolumen $V_{Akt,max}$ ist somit eine vorgegebene, den Aktor kennzeichnende Konstante. Das aktuelle Aktorinnenvolumen $V_{Akt}(t)$ ist kleiner oder gleich dem maximalen Aktorinnenvolumen $V_{Akt,max}$, je nachdem wie groß das Volumen $V_{Zyl}(t)$ des aktuell in das maximale Aktorinnenvolumen $V_{Akt,max}$ ragenden Teils des Arbeitskolbens ist. Der in das Aktorinnenvolumen $V_{Akt}$ eindringende Arbeitskolben schließt das Aktorinnenvolumen ab, sodass ein geschlossenes Aktorinnenvolumen vorliegt.

Der Begriff "Arbeitskolben" ist weit gefasst zu verstehen. Insbesondere fallen darunter zylinderförmige, aber auch geometrisch anders gestaltete Formen des Arbeitskolbens. Der Arbeitskolben kann insbesondere als Spindel ausgebildet sein, die variabel in das aktuelle Innenvolumen eindringt.

Erfindungsgemäß ist das Aktorinnenvolumen mit einem gasförmigen Medium der Masse $m_{Gas,0}$ sowie einem flüssigen Medium der Masse $m_{FLüss,0}$ befüllt, wobei das gasförmige Medium ein aktuelles Volumen $V_{Gas}(t)$ und das flüssige Medium ein aktuelles Volumen $V_{Flüss}(t)$ einnimmt, wobei gilt:

$$(3) \qquad V_{Akt,max} = V_{Zyl}(t) + V_{Gas}(t) + V_{Flüss}(t).$$

Das flüssige Medium ist beispielsweise ein Schmiermittel (Schmieröl etc.). Insbesondere umfasst der Begriff "flüssiges Medium" Flüssigkeiten mit unterschiedlicher Viskosität. Das gasförmige Medium ist beispielsweise ein Gas oder ein Gasgemisch, beispielsweise Stickstoff oder Luft.

Die Massen $m_{Gas,0}$ und $m_{FLüss,0}$ werden vorteilhaft bei der Erstbefüllung des Aktorinnenvolumens oder bei nachfolgenden Überprüfungen des Aktors, vorteilhaft messtechnisch, bestimmt. Bei unterstellter Inkompressibilität des flüssigen Mediums, ändert sich das Volumen $V_{Gas}(t)$ des gasförmigen Mediums abhängig von der Änderung des Volumens $V_{Zyl}(t)$. Dabei wird weiterhin unterstellt, dass sich die Massen des flüssigen Mediums sowie des gasförmigen Mediums zeitlich nicht ändern, d.h. $m_{Flüss}(t) = M_{Flüss,0}$, und $m_{Gas}(t) = m_{Gas,0}$, d.h. dass weder ein Gas- noch ein Flüssigkeitsleck im Aktor vorliegt.

Das vorgeschlagene Verfahren umfasst folgende Schritte.

In einem ersten Schritt erfolgt ein Ermitteln eines Drucks $P_{Akt}(t)$ und einer Temperatur $T_{Akt}(t)$ für das Aktorinnenvolumen $V_{Akt}(t)$. Vorteilhaft wird der Druck $P_{Akt}(t)$ und/oder die Temperatur $T_{Akt}(t)$ mittels Sensoren gemessen. Die Sensoren sind hierzu vorteilhaft entsprechend am Aktor angeordnet. Alternativ oder zusätzlich kann der Druck $P_{Akt}(t)$ und/oder die Temperatur $T_{Akt}(t)$ vorteilhaft mittels eines Zustandsschätzers auf Basis folgender gemessener Parameter ermittelt werden: elektrische Stromaufnahme $I_{Mot}(t)$ des elektrischen Antriebs, und/oder Temperatur $T_{Mot}(t)$ des elektrischen Antriebs, und/oder Last $L_{Mot}(t)$ des elektrischen Antriebs, und/oder Last $L_{Zyl}(t)$ des Arbeitskolbens. Dabei wird unterstellt, dass der elektrische Antrieb in einer wärmeleitenden Verbindung mit dem Aktorinnenvolumen bzw. dem das Aktorinnenvolumen umgebende Gehäuse steht. Aus den genannten Parametern lässt sich bspw. auf die vom elektrischen Antrieb erzeugte Wärme schließen, die über die wärmeleitende Verbindung auf das Aktorinnenvolumen wirkt oder auf die mechanische vom Arbeitskolben erzeugte Energie, die teilweise im Aktorinnenvolumen in Wärme umgewandelt wird. Aus einer Vielzahl von Messreihen kann damit ein modellbasierter Zustandsschätzer formuliert werden, der den Druck $P_{Akt}(t)$ und die Temperatur $T_{Akt}(t)$ hinreichend genau schätzt.

Der Zustandsschätzer basiert vorteilhaft auf einem entsprechenden Zustandsmodell des Aktors und erlaubt bei Vorgabe von für das Zustandsmodell benötigten, typischerweise mittels Sensoren gemessenen Eingangsgrößen, die Ermittlung des geschätzten Drucks $P_{Akt}(t)$ und der geschätzten Temperatur $T_{Akt}(t)$. Grundsätzlich gilt, dass je mehr Eingangsgrößen verfügbar sind, die von dem Zustandsmodell auch berücksichtigt werden, desto genauer ist die Schätzung der Größen $P_{Akt}(t)$ und $T_{Akt}(t)$. Die Schätzung basiert somit vorteilhaft auf einer Kombination von Messwerten durch den Zustandsschätzer. Der Zustandsschätzer wird vorteilhaft auf Basis des Zustandsmodells als Kalman-Filter formuliert. Natürlich sind andere bekannte Zustandsschätzer bei Eignung ebenfalls verwendbar.

In einem zweiten Schritt des vorgeschlagenen Verfahrens erfolgt basierend auf dem zuvor ermittelten Druck $P_{Akt}(t)$ und der zuvor ermittelten Temperatur $T_{Akt}(t)$ und unter der Annahme, dass weder ein Gas- noch ein Flüssigkeitsleck im Aktor vorliegt, ein Schätzen des aktuellen Volumens $V_{Flüss}(t)$ des flüssigen Mediums im Aktorinnenvolumen als $VG_{Flüss}(t)$.

Das Schätzen von $V_{Flüss}(t)$, bei einem idealen Gas als gasförmiges Medium, basiert vorteilhaft auf folgendem Zusammenhang:

$$(4) \qquad VG_{Flüss}(t) = V_{Akt,max} - V_{Zyl}(t) - V_{Gas}(t)$$

$$(5) \qquad V_{Gas}(t) = \frac{m_{Gas,0} R_{Gas} T_{Akt}(t)}{P_{Akt}(t)}$$

mit $R_{Gas}$: Spezifische Gaskonstante

Ist das gasförmige Medium kein ideales Gas so ist Gleichung (5) durch eine das jeweilige gasförmige Medium beschreibende Gleichung zu ersetzen. Hierzu wird auf den Stand der Technik verwiesen.

Bei einem zylinderförmig gestalteten Arbeitskolben wird das Volumen $V_{Zyl}(t)$ vorteilhaft durch folgenden Zusammenhang ermittelt:

$$(6) \qquad V_{Zyl}(t) = \pi r^2 x_{Zyl}(t)$$

mit

r:     Zylinderradius des Arbeitskolbens
x:     Position des Arbeitskolbens, wobei gilt wenn x(t) = 0 dann $V_{Zyl}(t) = 0$.

Vorteilhaft gilt: $x(t) \geq 0$.

In einem dritten Schritt erfolgt ein Vorgeben einer ersten Bedingung B1 für das Volumen $VG_{Flüss}(t)$. So wird beispielsweise im einfachsten Fall ein Wert G1 und eine Unschärfe $\Delta$ vorgegeben, wobei als Bedingung B1 gelten soll, dass $VG_{Flüss}(t)$ im Intervall: $G1 \pm \Delta$ liegt. Bei einer gegebenen Temperatur ist beispielsweise $G1 = V_{Flüss,0}$, wobei $V_{Flüss,0}$ dem Volumen der Masse $m_{Flüss,0}$ bei der gegebenen Temperatur entspricht. Weiterhin vorteilhaft kann $G1 = G1(T_{Akt}(t))$ sein, d.h. abhängig von der ermittelten Temperatur $T_{Akt}(t)$ variieren. Damit lässt sich ein temperaturabhängiges Volumen des flüssigen Mediums mit der Masse $m_{Flüss,0}$ kompensieren.

In einem vierten Schritt erfolgt sofern das Volumen $VG_{Flüss}(t)$ Bedingung B1 nicht erfüllt, ein Ausgeben einer Warnung. Um im vorstehenden Beispiel zu bleiben, wird die Warnung dann ausgegeben, wenn gilt: $VG_{Flüss}(t) < G1$.

Vorteilhaft werden zusätzlich zu den vorstehend beschriebenen Schritten eins bis vier nachfolgende Schritte fünf bis sieben ausgeführt. Dabei erfolgt im fünften Schritt basierend auf dem ermittelten Druck $P_{Akt}(t)$ und der ermittelten Temperatur $T_{Akt}(t)$ und unter der Annahme, dass weder ein Gas- noch ein Flüssigkeitsleck im Aktor vorliegt, ein Ermitteln eines Leckvolumenstroms $\dot{V}_{Leck}$, wobei gilt:

$$(7) \qquad \dot{V}_{Leck}(t) = \dot{V}_{Gas}(t) + \dot{V}_{Flüss}(t) + \dot{V}_{Zyl}(t) - \dot{V}_{Akt,max} .$$

Im sechsten Schritt erfolgt ein Vorgeben einer zweiten Bedingung B2 für den Leckvolumenstrom $\dot{V}_{Leck}(t)$ und im siebten Schritt erfolgt, sofern der Leckvolumenstrom $\dot{V}_{Leck}(t)$ die zweite Bedingung B2 nicht erfüllt, ein Ausgeben einer Warnung.

Vorteilhaft erfolgt das Ermitteln des Leckvolumenstroms $\dot{V}_{Leck}(t)$ basierend auf folgendem Zusammenhang:

$$(8) \qquad \dot{V}_{Leck}(t) = \dot{V}_{Zyl}(t) + \dot{V}_{Gas}(t)$$

wobei gilt: $\dot{m}_{Flüss} = 0$, $\dot{m}_{Gas} = 0$ und $\dot{V}_{Akt,max}(t) = 0$, mit

$\dot{m}_{Flüss}$ :     zeitliche Änderung der Masse des im Aktorinnenvolumen enthaltenen flüssigen Mediums
$\dot{m}_{Gas}$:     zeitliche Änderung der Masse des im Aktorinnenvolumen enthaltenen gasförmigen Mediums.

Idealerweise (es tritt kein Leck auf) ist $\dot{V}_{Leck}(t) = 0$. Wird dies bspw. als zweite Bedingung B2 festgelegt, und ergibt sich für $\dot{V}_{Leck}(t)$ ein Wert ungleich Null, so wird gemäß dem siebten Schritt eine Warnung ausgegeben.

Vorteilhafterweise basiert das Ermitteln des Gasvolumenstroms $\dot{V}_{Gas}$, bei einem idealen Gas als gasförmiges Medium, auf folgendem Zusammenhang:

$$(8) \qquad \dot{V}_{Gas}(t) = \frac{P_{Akt}(t)m_{Gas,0}R_{Gas}\dot{T}_{Akt}(t) - m_{Gas,0}R_{Gas}T_{Akt}(t)\dot{P}_{Akt}(t)}{P_{Akt}(t)^2}$$

Weiterhin vorteilhafterweise wird der Volumenstrom $\dot{V}_{Zyl}(t)$ auf Basis folgenden Zusammenhangs ermittelt:

$$(9) \qquad \dot{V}_{Zyl}(t) = \pi r^2 \dot{x}_{Zyl}(t) ,$$

wobei unterstellt wird, dass der Arbeitskolben zylinderförmig ausgestaltet ist. Natürlich sind andere Ausgestaltungen des Arbeitskolbens möglich, sodass sich dann eine entsprechend veränderte Formel (9) ergibt.

Das vorgeschlagene Verfahren umfasst somit entweder die Schritte 1-4 oder alle Schritte 1-7.

Das vorgeschlagene Verfahren basiert darauf, auf Basis des für das aktuelle Innenvolumen $V_{Akt}(t)$ ermittelten Drucks $P_{Akt}(t)$ und der Temperatur $T_{Akt}(t)$ das geschätzte aktuelle Volumen $VG_{Flüss}(t)$ des flüssigen Mediums oder das geschätzte aktuelle Volumen $VG_{Flüss}(t)$ des flüssigen Mediums und den Leckvolumenstrom $\dot{V}_{Leck}$ zu ermitteln. Warnungen werden dann ausgegeben, wenn ein Gasleck und/oder ein Flüssigkeitsleck im Aktor vorliegt, so dass gasförmiges Medium und/oder flüssiges Medium in das Aktorinnenvolumen eindringt oder dieses verlässt, was sich dadurch ausdrückt, dass die entsprechend vorgegebenen Bedingungen B1 und/oder B2 nicht erfüllt werden. Die Bedingungen B1 und B2 definieren somit Zustände ohne Leck.

Eine Unterscheidung, ob ein Gasleck oder ein Flüssigkeitsleck vorliegt, kann mit dem vorgeschlagenen Verfahren nicht getroffen werden. Gleichwohl ermöglicht das vorgeschlagene Verfahren auf eine einfache und robuste Weise das Vorliegen eines Lecks, welches zu einer Änderung des flüssigen und/oder des gasförmigen Mediums im aktuellen Innenvolumen führt, frühzeitig zu erkennen und anzuzeigen.

Mit anderen Worten ermöglicht das Verfahren eine Undichtigkeit oder eine sich anbahnende Undichtigkeit des Aktors frühzeitig zu erkennen. Der Verlust des flüssigen Mediums (insbesondere von Schmiermittel) kann zu einem Versagen von Komponenten (bspw. Kugellagern, Getriebe sowie Spindeln, etc) im Aktor führen. So kann eine Undichtigkeit des Aktors insbesondere zu einem Schmiermittelverlust führen, aber auch zur Anlagerung von Wasser im Aktor, welches die Schmiereigenschaften des Schmiermittels verschlechtert. Dies kann unter anderem auch zum Ausfall der vorher benannten Komponenten führen.

Das vorgeschlagene Verfahren ermöglicht insgesamt eine robuste, detaillierte, und genaue Überwachung eines Aktors hinsichtlich sich andeutender Fehler, insbesondere zur frühzeitigen Erkennung einer Undichtigkeit des Aktors und/oder eines Verlusts von Schmiermittel aus dem Aktor. Durch den Einsatz des Verfahrens ist es möglich, auf Basis der ausgegebenen Warnung sehr frühzeitig Vorkehrungen zu treffen oder Maßnahmen einzuleiten, die ein Fortschreiten eines Aktorfehlers bis hin zum Aktorausfall unterbinden.

Eine ausgegebene Warnung kann vorteilhaft eine geänderte Ansteuerung des Aktors bedingen. So wird die Ansteuerung des elektrischen Antriebs nach Ausgabe einer Warnung vorteilhaft manuell, teil- oder vollautomatisch derart verändert, dass die vom Aktor abgebbare maximale Leistung reduziert wird, oder der Aktor vollständig abgeschaltet wird.

Sind derartige Aktoren in Luftfahrzeugen verbaut, wird vorzugsweise die erzeugte Warnung im Cockpit zumindest optisch ausgegeben und/oder an ein ECAM System (ECAM = Electronic Centralized Aircraft Monitor) des Luftfahrzeugs oder an ein vergleichbares System weitergeleitet.

Das Ausgeben der Warnung erfolgt vorteilhaft als akustisches Signal, als optisches Signal und/oder als haptisches Signal.

Ein weiterer Aspekt der Erfindung betrifft ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ein weiterer Aspekt der Erfindung betrifft ein Computer-Programm-Produkt mit auf einem maschinenlesbaren Träger gespeichertem Programmcode zur Durchführung des Verfahrens, wie vorstehend beschrieben, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Ein weiterer Aspekt der Erfindung betrifft eine Vorrichtung zur Zustandsüberwachung eines elektromechanischen Aktors, der einen Antrieb aufweist, mittels dem ein Arbeitskolben verfahrbar ist, wobei das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

mit

$$(2) \qquad V_{Zyl}(t) < V_{Akt,max},$$

mit

$V_{Akt,max}$: maximales Aktorinnenvolumen

$V_{Zyl}(t)$: Volumen $V_{Zyl}(t)$ des aktuell in das maximale Aktorinnenvolumen $V_{Akt,max}$ ragenden Teils des Arbeitskolbens.

Das Aktorinnenvolumen $V_{Akt,max}$ ist mit einem gasförmigen Medium der Masse $m_{Gas,0}$ sowie einem flüssigen Medium der Masse $m_{FLüss,0}$ befüllt, wobei das gasförmige Medium ein aktuelles Volumen $V_{Gas}(t)$ und das flüssige Medium ein aktuelles Volumen $V_{Flüss}(t)$ einnimmt, wobei gilt:

$$(3) \qquad V_{Akt,max} = V_{Zyl}(t) + V_{Gas}(t) + V_{Flüss}(t).$$

Die vorgeschlagene Vorrichtung umfasst ein erstes Mittel zum Ermitteln eines Drucks $P_{Akt}(t)$ und einer Temperatur $T_{Akt}(t)$ für das Aktorinnenvolumen $V_{Akt}(t)$. Das Ermitteln des Drucks $P_{Akt}(t)$ und der Temperatur $T_{Akt}(t)$ erfolgt dabei vorteilhaft auf Basis von Messungen des Drucks $P_{Akt}(t)$ und der Temperatur $T_{Akt}(t)$ und/oder auf Basis eines entsprechenden Schätzers für den Druck $P_{Akt}(t)$ und die Temperatur $T_{Akt}(t)$.

Die Vorrichtung umfasst weiterhin ein zweites Mittel, mit dem basierend auf dem ermittelten Druck $P_{Akt}(t)$ und der ermittelten Temperatur $T_{Akt}(t)$ und unter der Annahme, dass weder ein Gas- noch ein Flüssigkeitsleck im Aktor vorliegt, das aktuelle Volumen $V_{Flüss}(t)$ des flüssigen Mediums im Aktorinnenvolumen als $VG_{Flüss}(t)$ geschätzt wird, eine erste Schnittstelle zum Vorgeben einer ersten Bedingung B1 für das Volumen $VG_{Flüss}(t)$, und ein drittes Mittel, mit dem sofern das Volumen $VG_{Flüss}(t)$ Bedingung B1 nicht erfüllt, eine Warnung ausgegeben wird.

Vorteilhaft umfasst die Vorrichtung zusätzlich zu den Mitteln eins bis drei und der ersten Schnittstelle ein viertes und ein fünftes Mittel sowie eine zweite Schnittstelle.

Das vierte Mittel ist basierend auf dem ermittelten Druck $P_{Akt}(t)$ und der ermittelten Temperatur $T_{Akt}(t)$ und unter der Annahme, dass weder ein Gas- noch ein Flüssigkeitsleck im Aktor vorliegt, zum Ermitteln eines Leckvolumenstroms $\dot{V}_{Leck}$ eingerichtet, wobei gilt:

$$(4) \qquad \dot{V}_{Leck}(t) = \dot{V}_{Gas}(t) + \dot{V}_{Flüss}(t) + \dot{V}_{Zyl(t)} - \dot{V}_{Akt,max} .$$

Die zweite Schnittstelle dient dem Vorgeben einer zweiten Bedingung B2 für den Leckvolumenstrom $\dot{V}_{Leck}(t)$. Das fünfte Mittel ist zur Ausgabe einer Warnung eingerichtet, sofern der Leckvolumenstrom $\dot{V}_{Leck}(t)$ die zweite Bedingung B2 nicht erfüllt.

Vorteile und bevorzugte Weiterbildungen der vorgeschlagenen Vorrichtung ergeben sich durch eine analoge und sinngemäße Übertragung der in Zusammenhang mit dem vorgeschlagenen Verfahren gemachten Ausführungen.

Ein weiterer Aspekt der Erfindung betrifft ein Fahrzeug, insbesondere ein Kraftfahrzeug, ein Luftfahrzeug, ein Raumfahrzeug, ein Schienenfahrzeug oder ein Wasserfahrzeug mit einer vorstehend beschriebenen Vorrichtung.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1    eine schematisierte Darstellung zur Veranschaulichung von relevanten Volumen des Aktors,

Fig. 2    einen schematisierten Ablauf einer Variante eines vorgeschlagenen Verfahrens, und

Fig. 3    einen schematisierten Aufbau einer Variante einer vorgeschlagenen Vorrichtung.

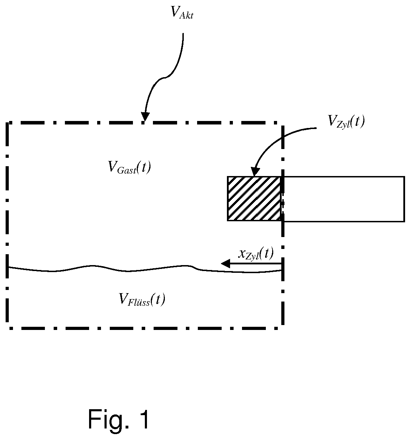

**Fig. 1** zeigt eine schematisierte 2D-Darstellung zur Veranschaulichung von relevanten Volumen des Aktors. Das maximale Aktorinnenvolumen $V_{Akt,max}$ wird begrenzt durch die strich-punktierte Linie. Das maximale Aktorinnenvolumen $V_{Akt,max}$ ist weiterhin zeitlich konstant und für den jeweiligen Aktor entsprechend vorgegeben. Schraffiert dargestellt ist der Volumenteil $V_{Zyl}(t)$ des Arbeitskolbens, der in das maximale Aktorinnenvolumen $V_{Akt,max}$ hineinragt. Vorliegend weist der Arbeitskolben eine Zylinderform auf, sodass sich der Volumenteil $V_{Zyl}(t)$ des Arbeitskolbens wie folgt bestimmt: $V_{Zyl}(t) = \pi r^2 x_{Zyl}(t)$. Dabei ist r der Zylinderradius. Vorliegend sei $x_{Zyl}(t)$ immer größer Null, wobei gilt: $V_{Zyl}(x=0) = 0$.

Das aktuell verbleibende Aktorinnenvolumen ergibt sich zu: $V_{Akt}(t) = V_{Akt,max} - V_{Zyl}(t)$. Das Aktorinnenvolumen $V_{Akt}(t)$ setzt sich vorliegend aus einem Volumenanteil $V_{Gas}(t)$ eines gasförmigen Mediums, beispielsweise Stickstoff, und aus einem Volumenanteil $V_{Flüss}(t)$ eines flüssigen Mediums, beispielsweise eines Schmiermittels, zusammen.

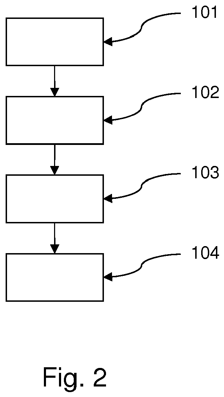

**Fig. 2** zeigt einen schematisierten Ablauf einer Variante des vorgeschlagenen Verfahrens zur Zustandsüberwachung eines elektromechanischen Aktors, der einen Antrieb als Antrieb aufweist, mittels dem ein Arbeitskolben verfahrbar ist, wobei das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

$$(2) \qquad V_{Zyl}(t) < V_{Akt,max},$$

mit

$V_{Akt,max}$: maximales Aktorinnenvolumen
$V_{Zyl}(t)$: Volumen $V_{Zyl}(t)$ des aktuell in das maximale Aktorinnenvolumen $V_{Akt,max}$ ragenden Teils des Arbeitskolbens, und

wobei das Aktorinnenvolumen $V_{Akt,max}$ zusätzlich mit einem idealen Gas der Masse $m_{Gas,0}$ sowie einem flüssigen Schmiermittel der Masse $m_{FLüss,0}$ befüllt ist, wobei das Gas ein aktuelles Volumen $V_{Gas}(t)$ und das flüssige, als ihn kompatibel angenommene Schmiermittel ein aktuelles Volumen $V_{Flüss}(t)$ einnimmt, wobei gilt:

$$(3) \; V_{Akt,max} = V_{Zyl}(t) + V_{Gas}(t) + V_{Flüss}(t):$$

Das Verfahren umfasst folgende Schritte. In einem ersten Schritt 101 erfolgt ein Ermitteln eines Drucks $P_{Akt}(t)$ und einer Temperatur $T_{Akt}(t)$ für das Aktorinnenvolumen $V_{Akt}(t)$ mittels eines Drucksensors und eines Temperatursensors, die mit dem Aktorinnenvolumen in Verbindung stehen.

In einem zweiten Schritt 102 erfolgt basierend auf dem Druck $P_{Akt}(t)$ und der Temperatur $T_{Akt}(t)$ ein Schätzen des aktuellen Volumens $V_{Flüss}(t)$ des flüssigen Schmiermittels im Aktorinnenvolumen als $VG_{Flüss}(t)$. Diese Schätzung erfolgt auf Basis folgende Zusammenhänge:

$$(4) \qquad VG_{Flüss}(t) = V_{Akt,max} - V_{Zyl}(t) - V_{Gas}(t)$$

$$(5) \qquad V_{Gas}(t) = \frac{m_{Gas,0} R_{Gas} T_{Akt}(t)}{P_{Akt}(t)}$$

mit $R_{Gas}$: Spezifische Gaskonstante
In einem dritten Schritt 103 erfolgt ein Vorgeben einer ersten Bedingung B1 für das Volumen $VG_{Flüss}(t)$.
In einem vierten Schritt 104 erfolgt, sofern das Volumen $VG_{Flüss}(t)$ Bedingung B1 nicht erfüllt, ein Ausgeben einer optischen und akustischen Warnung.

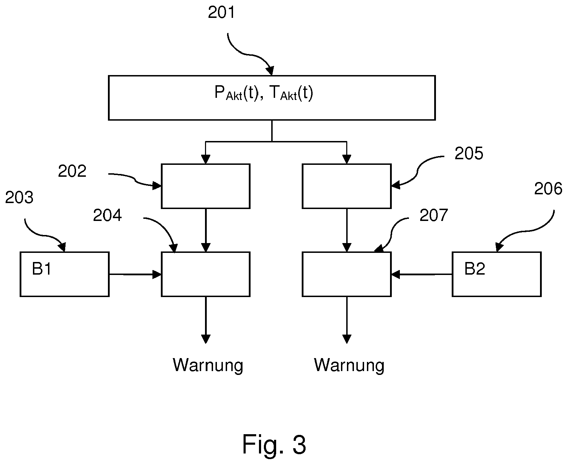

**Fig. 3** zeigt einen schematisierten Aufbau einer Variante der vorgeschlagenen Vorrichtung zur Zustandsüberwachung eines elektromechanischen Aktors, der einen elektrischen Antrieb aufweist, mittels dem ein Arbeitskolben verfahrbar ist, wobei das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

mit

$$(2) \qquad V_{Zyl}(t) < V_{Akt,max},$$

mit:

$V_{Akt,max}$: maximales Aktorinnenvolumen
$V_{Zyl}(t)$: Volumen $V_{Zyl}(t)$ des aktuell in das maximale Aktorinnenvolumen $V_{Akt,max}$ ragenden Teils des Arbeitskolbens, und wobei

das Aktorinnenvolumen $V_{Akt,max}$ zusätzlich mit einem gasförmigen Medium der Masse $m_{Gas,0}$ sowie einem flüssigen Medium der Masse $m_{FLüss,0}$ befüllt ist, wobei das gasförmige Medium ein aktuelles Volumen $V_{Gas}(t)$ und das flüssige Medium ein aktuelles Volumen $V_{Flüss}(t)$ einnimmt, wobei gilt:

$$(3) \qquad V_{Akt,max} = V_{Zyl}(t) + V_{Gas}(t) + V_{Flüss}(t).$$

Die vorgeschlagene Vorrichtung umfasst ein erstes Mittel 201 zum Ermitteln eines Drucks $P_{Akt}(t)$ und einer Temperatur $T_{Akt}(t)$ für das Aktorinnenvolumen $V_{Akt}(t)$, ein zweites Mittel 202, mit dem basierend auf dem Druck $P_{Akt}(t)$ und der Temperatur $T_{Akt}(t)$ das aktuelle Volumens $V_{Flüss}(t)$ des flüssigen Mediums im Aktorinnenvolumen als $VG_{Flüss}(t)$ geschätzt wird, eine erste Schnittstelle 203 zum Vorgeben einer ersten Bedingung B1 für das Volumen $VG_{Flüss}(t)$, und ein drittes Mittel 204, mit dem sofern das Volumen $VG_{Flüss}(t)$ Bedingung B1 nicht erfüllt, eine Warnung ausgegeben wird. Weiterhin umfasst die Vorrichtung ein viertes Mittel 205 zum Ermitteln eines Leckvolumenstroms $\dot{V}_{Leck}$, wobei gilt:

$$(4) \qquad \dot{V}_{Leck}(t) = \dot{V}_{Gas}(t) + \dot{V}_{Flüss}(t) + \dot{V}_{Zyl(t)} - \dot{V}_{Akt,max} ,$$

eine zweite Schnittstelle 206 zum Vorgeben einer zweiten Bedingung B2 für den Leckvolumenstrom $\dot{V}_{Leck}(t)$, und ein fünftes Mittel 207, mit dem sofern der Leckvolumenstrom $\dot{V}_{Leck}(t)$ die zweite Bedingung B2 nicht erfüllt, eine Warnung ausgegeben wird.

Es wird angenommen, dass das Schmiermittel inkompressibel und damit nicht von dem Druck $P_{Akt}(t)$ im Aktor abhängig ist.

Wenn Dichtungen des Aktors perfekt geschlossen sind, ist $m'_{Luft}(t)$ konstant, weil kein Austausch mit der Umgebung stattfinden kann. Damit kann das Volumen der Luft in dem Aktor aus der geschätzten oder gemessenen Lufttemperatur $T'_{Luft}(t)$ und dem geschätzten oder gemessenen Druck $P'_{Akt}(t)$ in dem Aktor bestimmt werden. Damit kann das Schmiermittelvolumen $VG_{Schm}(t)$ im Aktor bestimmt werden. Vorteilhaft wird, wenn das Schmiermittelvolumen $VG_{Schm}(t)$, welches mittels des Drucks $P_{Akt}(t)$ und der Temperatur $T'_{Luft}(t)$ im Aktor berechnet wird, kleiner als ein vorgegebener Schwellenwert ist, eine Warnung erzeugt und ausgegeben.

Eine vorteilhafte Weiterbildung der zweiten Verfahrensversion zeichnet sich dadurch aus, dass die Schätzung des Luftvolumens $VG_{Luft}(t)$ und des Luftvolumenstroms $\dot{VG}_{Luft}(t)$, auf Basis folgender Zusammenhänge ermittelt wird:

$$(14) \qquad VG_{Luft}(t) = V_{Akt}(t) - VG_{Schm}(t) - V_{Zyl}(t)$$

$$(15) \qquad \dot{VG}_{Luft}(t) = \dot{V}_{Akt}(t) - \dot{VG}_{Schm}(t) - \dot{V}_{Zyl}(t) + \dot{VG}_{Leck}(t).$$

mit:

$VG_{Luft}(t)$    := geschätztes Volumen der Luftmenge im Aktor
$V_{Akt}(t)$    := Innenvolumen des Aktors
$VG_{Schm}(t)$    := geschätztes Volumen der Schmiermittelmenge im Aktor
$V_{Zyl}(t)$    := gemessenes Volumen des Zylinders
$\dot{VG}_{Luft}(t)$    := geschätzter Luft-Volumenstrom
$\dot{V}_{Akt}(t)$    := Volumenstrom des Innenvolumens des Aktors
$\dot{VG}_{Schm}(t)$    := geschätzter Schmiermittel-Volumenstrom
$\dot{V}_{Zyl}(t)$    := aus Messungen ermittelter Zylinder-Volumenstrom
$\dot{VG}_{Leck}(t)$    := geschätzter Leckvolumenstrom
$t$    := Zeit.

Für $\dot{V}_{Akt}(t)$ gilt im stationären Fall: $d(POS_{Akt}(t))/dt = 0$: $V_{Akt}(t) = 0$.

Eine vorteilhafte Weiterbildung dieser zweiten Verfahrensversion zeichnet sich dadurch aus, dass der geschätzte Zustand $ZG(t)$ einen geschätzten Leckvolumenstrom $\dot{VG}_{Leck}(t)$ umfasst, für den folgender Zusammenhang gilt:

$$(16) \qquad \dot{VG}_{Leck}(t) = \dot{V}_{Zyl}(t) + \frac{P'_{Akt}(t)\, m'_{Luft}(t)\, R_{Luft}\, \dot{T}'_{Luft}(t) - m'_{Luft}(t)\, R_{Luft}\, T'_{Luft}(t)\, \dot{P}'_{Akt}(t)}{P'^2_{Akt}(t)}$$

mit:

$\dot{T}'_{Luft}(t)$    := geschätzte oder gemessene Änderungsgeschwindigkeit der Luft-Temperatur im Aktorinnenvolumen

$\dot{P}'_{Akt}(t)$      := geschätzte oder gemessene Änderungsgeschwindigkeit des Drucks im Aktorinnenvolumen

$m'_{Luft}(t)$      := geschätzte oder gemessene Luftmasse im Aktorinnenvolumen

Wenn eine Undichtigkeit im Aktor vorhanden ist, muss der Leckvolumenstrom $\dot{VG}_{Leck}(t)$ berücksichtigt werden. Der Volumenstrom des Aktorinnenvolumen $\dot{V}_{Akt}(t)$ ist Null, da sich das Volumen im Aktor im stationären Fall nicht ändert. Unter der Annahme, dass kein Schmiermittel oder Luft aus den Aktor entweicht oder eintritt, ist auch der Schmiermittelvolumenstrom $\dot{V}_{Schm}(t)$ gleich Null. Damit ergibt sich der Leckstrom entsprechend Gleichung (16). Vorteilhaft wird eine Warnung erzeugt und ausgegeben, wenn gilt:

$$(17) \quad |\dot{VG}_{Leck}(t)| > GRENZW \quad \text{mit GRENZW: vorgegebener Grenzwert.}$$

Ein weiterer Aspekt der Erfindung betrifft ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ein weiterer Aspekt der Erfindung betrifft ein Computer-Programm-Produkt mit auf einem maschinenlesbaren Träger gespeichertem Programmcode zur Durchführung des Verfahrens, wie vorstehend beschrieben, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Ein weiterer Aspekt der Erfindung betrifft eine zweite Vorrichtung zur Zustandsüberwachung eines elektromechanischen Aktors, der einen elektrischen Antrieb und einen verfahrbaren Arbeitskolben umfasst, wobei ein Verfahren des Arbeitskolbens ein Innenvolumen $V_{Akt}(t)$ des Aktors ändert.

Die zweite Vorrichtung umfasst eine dritte Schnittstelle zum Bereitstellen von aktuellen Stellgrößen $SG(t)$ zur Regelung des Elektromotors, ein sechstes Mittel zum Erfassen eines aktuellen Zustands $ZA(t)$ des Aktors, der mehrere der folgenden Zustandskomponenten umfasst:

- elektrische Stromaufnahme $I_{Mot}(t)$ des Elektromotor
- elektrische Spannung $U_{Mot}(t)$ am Elektromotor
- Position $POS_{Mot}(t)$ einer Welle des Elektromotors, bspw. eine Strecke $x_{Mot}$ oder ein Winkel φ
- Position $POS_{Zyl}(t)$ des Arbeitszylinders bspw. eine Strecke $x_{Zyl}$
- Temperatur $T_{Mot}(t)$ des Elektromotors
- Temperatur $T_{Luft}(t)$ der Luft im Innenvolumen $V_{Akt}(t)$
- Temperatur $T_{Schm}(t)$ eines Schmiermittels im Innenvolumen $V_{Akt}(t)$
- Last $L_{Mot}(t)$ des Elektromotors
- Last $L_{Zyl}(t)$ des Zylinders
- Druck $P_{Akt}(t)$ im Innenvolumen $V_{Akt}(t)$ des Aktors

Die vorgeschlagene zweite Vorrichtung umfasst weiterhin eine vierte Schnittstelle zum Bereitstellen eines modellbasierten Zustandsschätzers ZS zur Schätzung von Zuständen $ZG(t)$ des Aktors.

Die vorgeschlagene zweite Vorrichtung umfasst weiterhin eine Recheneinheit, mit der auf Basis der Stellgrößen $SG(t)$ und/oder des erfassten Zustands $ZA(t)$ ein geschätzter Zustand $ZG(t)$ des Aktors mittels des Zustandsschätzers ZS ermittelbar ist, wobei der geschätzte Zustand $ZG(t)$ folgende geschätzte Zustandskomponenten umfasst:

- ein geschätztes Schmiermittelvolumen $VG_{Schm}(t)$ im Aktor und ein geschätztes Luftvolumen $VG_{Luft}(t)$ im Aktor und/oder
- daraus abgeleitete folgende Größen: einen Schmiermittelvolumenstrom $\dot{VG}_{Schm}(t)$, und/oder einen Luftvolumenstrom $\dot{VG}_{Luft}(t)$ und/oder einen Leckvolumenstrom $\dot{VG}_{Leck}(t)$, der den Volumenstrom angibt, der das Innenvolumen $V_{Akt}(t)$ des Aktors verlässt.

Die vorgeschlagene zweite Vorrichtung umfasst weiterhin eine fünfte Schnittstelle zum Vorgeben einer ersten Bedingung B1 für das geschätzte Schmiermittelvolumen $VG_{Schm}(t)$ und/oder für die daraus abgeleiteten Größe $\dot{VG}_{Schm}(t)$, und zum Vorgeben einer zweiten Bedingung B2 für das geschätzte Luftvolumen $VG_{Luft}(t)$ und/oder für die daraus abgeleitete Größe $VG_{Luft}(t)$ und/oder für $\dot{V}G_{Leck}(t)$.

Die vorgeschlagene zweite Vorrichtung umfasst weiterhin ein siebtes Mittel, mit der, sofern das Schmiermittelvolumen $VG_{Schm}(t)$ und/oder die daraus abgeleitete Größe $VG_{Schm}(t)$ die Bedingung B1 nicht erfüllen, und/oder sofern das Luftvolumen $VG_{Luft}(t)$ und/oder die daraus abgeleitete Größe $\dot{V}G_{Luft}(t)$ und/oder die Größe $\dot{V}G_{Leck}(t)$ die Bedingung B2 nicht erfüllen, eine Warnung erzeugbar und ausgebbar ist.

Vorteile und bevorzugte Weiterbildungen ergeben sich durch eine analoge und sinngemäße Übertragung der in Zusammenhang mit der vorgeschlagenen zweiten Verfahrensversion gemachten Ausführungen.

Schließlich betrifft ein letzter Aspekt der Erfindung ein Fahrzeug, insbesondere ein Kraftfahrzeug, ein Luftfahrzeug, ein Raumfahrzeug, ein Schienenfahrzeug oder ein Wasserfahrzeug mit einer vorstehend beschriebenen zweiten Vorrichtung.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1     eine schematisierte Darstellung zur Veranschaulichung von relevanten Volumen des Aktors,
Fig. 2     einen schematisierten Ablauf einer Variante eines vorgeschlagenen Verfahrens, und
Fig. 3     einen schematisierten Aufbau einer Variante einer vorgeschlagenen Vorrichtung.

**Fig. 1** zeigt eine schematisierte 2D-Darstellung zur Veranschaulichung von relevanten Volumen des Aktors. Das maximale Aktorinnenvolumen $V_{Akt,max}$ wird begrenzt durch die strich-punktierte Linie. Das maximale Aktorinnenvolumen $V_{Akt,max}$ ist weiterhin zeitlich konstant und für den jeweiligen Aktor entsprechend vorgegeben. Schraffiert dargestellt ist der Volumenteil $V_{Zyl}(t)$ des Arbeitskolbens, der in das maximale Aktorinnenvolumen $V_{Akt,max}$ hineinragt. Vorliegend weist der Arbeitskolben eine Zylinderform auf, sodass sich der Volumenteil $V_{Zyl}(t)$ des Arbeitskolbens wie folgt bestimmt: $V_{Zyl}(t) = \pi r^2 x_{Zyl}(t)$. Dabei ist r der Zylinderradius. Vorliegend sei $x_{Zyl}(t)$ immer größer Null, wobei gilt: $V_{Zyl}(x=0) = 0$.

Das aktuell verbleibende Aktorinnenvolumen ergibt sich zu: $V_{Akt}(t) = V_{Akt,max} - V_{Zyl}(t)$. Das Aktorinnenvolumen $V_{Akt}(t)$ setzt sich vorliegend aus einem Volumenanteil $V_{Gas}(t)$ eines gasförmigen Mediums, beispielsweise Stickstoff, und aus einem Volumenanteil $V_{Flüss}(t)$ eines flüssigen Mediums, beispielsweise eines Schmiermittels, zusammen.

**Fig. 2** zeigt einen schematisierten Ablauf einer Variante des vorgeschlagenen Verfahrens zur Zustandsüberwachung eines elektromechanischen Aktors, der einen Antrieb als Antrieb aufweist, mittels dem ein Arbeitskolben verfahrbar ist, wobei das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

$$(2) \qquad V_{Zyl}(t) < V_{Akt,max},$$

mit

$V_{Akt,max}$:     maximales Aktorinnenvolumen
$V_{Zyl}(t)$:     Volumen $V_{Zyl}(t)$ des aktuell in das maximale Aktorinnenvolumen $V_{Akt,max}$ ragenden Teils des Arbeitskolbens, und

wobei das Aktorinnenvolumen $V_{Akt,max}$ zusätzlich mit einem idealen Gas der Masse $m_{Gas,0}$ sowie einem flüssigen Schmiermittel der Masse $m_{FLüss,0}$ befüllt ist, wobei das Gas ein aktuelles Volumen $V_{Gas}(t)$ und das flüssige, als ihn kompatibel angenommene Schmiermittel ein aktuelles Volumen $V_{Flüss}(t)$ einnimmt, wobei gilt:

$$(3) \; V_{Akt,max} = V_{Zyl}(t) + V_{Gas}(t) + V_{Flüss}(t):$$

Das Verfahren umfasst folgende Schritte. In einem ersten Schritt 101 erfolgt ein Ermitteln eines Drucks $P_{Akt}(t)$ und einer Temperatur $T_{Akt}(t)$ für das Aktorinnenvolumen $V_{Akt}(t)$ mittels eines Drucksensors und eines Temperatursensors, die mit dem Aktorinnenvolumen in Verbindung stehen.

In einem zweiten Schritt 102 erfolgt basierend auf dem Druck $P_{Akt}(t)$ und der Temperatur $T_{Akt}(t)$ ein Schätzen des aktuellen Volumens $V_{Flüss}(t)$ des flüssigen Schmiermittels im Aktorinnenvolumen als $VG_{Flüss}(t)$. Diese Schätzung erfolgt auf Basis folgende Zusammenhänge:

$$(4) \qquad VG_{Flüss}(t) = V_{Akt,max} - V_{Zyl}(t) - V_{Gas}(t)$$

$$(5) \qquad V_{Gas}(t) = \frac{m_{Gas,0} R_{Gas} T_{Akt}(t)}{P_{Akt}(t)}$$

mit $R_{Gas}$: Spezifische Gaskonstante

In einem dritten Schritt 103 erfolgt ein Vorgeben einer ersten Bedingung B1 für das Volumen $VG_{Flüss}(t)$.

In einem vierten Schritt 104 erfolgt, sofern das Volumen $VG_{Flüss}(t)$ Bedingung B1 nicht erfüllt, ein Ausgeben einer optischen und akustischen Warnung.

**Fig. 3** zeigt einen schematisierten Aufbau einer Variante der vorgeschlagenen Vorrichtung zur Zustandsüberwachung eines elektromechanischen Aktors, der einen elektrischen Antrieb aufweist, mittels dem ein Arbeitskolben verfahrbar ist, wobei das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

$$(2) \qquad V_{Zyl}(t) < V_{Akt,max},$$

mit:

$V_{Akt,max}$: maximales Aktorinnenvolumen
$V_{Zyl}(t)$: Volumen $V_{Zyl}(t)$ des aktuell in das maximale Aktorinnenvolumen $V_{Akt,max}$ ragenden Teils des Arbeitskolbens, und wobei

das Aktorinnenvolumen $V_{Akt,max}$ zusätzlich mit einem gasförmigen Medium der Masse $m_{Gas,0}$ sowie einem flüssigen Medium der Masse $m_{FLüss,0}$ befüllt ist, wobei das gasförmige Medium ein aktuelles Volumen $V_{Gas}(t)$ und das flüssige Medium ein aktuelles Volumen $V_{Flüss}(t)$ einnimmt, wobei gilt:

$$(3) \qquad V_{Akt,max} = V_{Zyl}(t) + V_{Gas}(t) + V_{Flüss}(t).$$

Die vorgeschlagene Vorrichtung umfasst ein erstes Mittel 201 zum Ermitteln eines Drucks $P_{Akt}(t)$ und einer Temperatur $T_{Akt}(t)$ für das Aktorinnenvolumen $V_{Akt}(t)$, ein zweites Mittel 202, mit dem basierend auf dem Druck $P_{Akt}(t)$ und der Temperatur $T_{Akt}(t)$ das aktuelle Volumens $V_{Flüss}(t)$ des flüssigen Mediums im Aktorinnenvolumen als $VG_{Flüss}(t)$ geschätzt wird, eine erste Schnittstelle 203 zum Vorgeben einer ersten Bedingung B1 für das Volumen $VG_{Flüss}(t)$, und ein drittes Mittel 204, mit dem sofern das Volumen $VG_{Flüss}(t)$ Bedingung B1 nicht erfüllt, eine Warnung ausgegeben wird. Weiterhin umfasst die Vorrichtung ein viertes Mittel 205 zum Ermitteln eines Leckvolumenstroms $\dot{V}_{Leck}$, wobei gilt:

$$(4) \qquad \dot{V}_{Leck}(t) = \dot{V}_{Gas}(t) + \dot{V}_{Flüss}(t) + \dot{V}_{Zyl(t)} - \dot{V}_{Akt,max},$$

eine zweite Schnittstelle 206 zum Vorgeben einer zweiten Bedingung B2 für den Leckvolumenstrom $\dot{V}_{Leck}(t)$, und ein fünftes Mittel 207, mit dem sofern der Leckvolumenstrom $\dot{V}_{Leck}(t)$ die zweite Bedingung B2 nicht erfüllt, eine Warnung ausgegeben wird.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

**Patentansprüche**

1. Verfahren zur Zustandsüberwachung eines elektromechanischen Aktors, der einen elektrischen Antrieb aufweist, mittels dem ein Arbeitskolben verfahrbar ist, wobei

   - das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

$$(2) \qquad V_{Zyl}(t) < V_{Akt,max},$$

   mit

   $V_{Akt,max}$: maximales Aktorinnenvolumen
   $V_{Zyl}(t)$: Volumen $V_{Zyl}(t)$ des aktuell in das maximale Aktorinnenvolumen $V_{Akt,max}$ ragenden Teils des Arbeitskolbens, und

   - das Aktorinnenvolumen $V_{Akt,max}$ zusätzlich mit einem gasförmigen Medium der Masse $m_{Gas,0}$ sowie einem flüssigen Medium der Masse $m_{FLüss,0}$ befüllt ist, wobei das gasförmige Medium ein aktuelles Volumen $V_{Gas}(t)$ und das flüssige Medium ein aktuelles Volumen $V_{Flüss}(t)$ einnimmt, wobei gilt:

$$(3) \qquad V_{Akt,max} = V_{Zyl}(t) + V_{Gas}(t) + V_{Flüss}(t)$$

   umfassend folgende Schritte:

   - Ermitteln (101) eines Drucks $P_{Akt}(t)$ und einer Temperatur $T_{Akt}(t)$ für das Aktorinnenvolumen $V_{Akt}(t)$,
   - basierend auf dem Druck $P_{Akt}(t)$ und der Temperatur $T_{Akt}(t)$ und unter der Annahme, dass weder ein Gas- noch ein Flüssigkeitsleck im Aktor vorliegt, Schätzen (102) des aktuellen Volumens $V_{Flüss}(t)$ des flüssigen Mediums im Aktorinnenvolumen als $VG_{Flüss}(t)$, wobei gilt: $VG_{Flüss}(t) = V_{Akt,max} - V_{Zyl}(t) - V_{Gas}(t)$
   - Vorgeben (103) einer ersten Bedingung B1 für das Volumen $VG_{Flüss}(t)$ und
   - sofern das Volumen $VG_{Flüss}(t)$ Bedingung B1 nicht erfüllt, Ausgeben (104) einer Warnung.

2. Verfahren nach Anspruch 1,
   mit folgenden Schritten:

   - basierend auf dem ermittelten Druck $P_{Akt}(t)$ und der ermittelten Temperatur $T_{Akt}(t)$ und unter der Annahme, dass weder ein Gas- noch ein Flüssigkeitsleck im Aktor vorliegt, Ermitteln eines Leckvolumenstroms $\dot{V}_{Leck}$, wobei gilt:

$$(4) \qquad \dot{V}_{Leck}(t) = \dot{V}_{Gas}(t) + \dot{V}_{Flüss}(t) + \dot{V}_{Zyl}(t) - \dot{V}_{Akt,max}$$

   - Vorgeben einer zweiten Bedingung B2 für den Leckvolumenstrom $\dot{V}_{Leck}(t)$, und
   - sofern der Leckvolumenstrom $\dot{V}_{Leck}(t)$ die zweite Bedingung B2 nicht erfüllt, Ausgeben einer Warnung.

3. Verfahren nach Anspruch 1 oder 2,
   bei dem das Schätzen von $V_{Flüss}(t)$, bei einem idealen Gas als gasförmiges Medium, auf folgendem Zusammenhang basiert:

$$(4) \qquad VG_{Flüss}(t) = V_{Akt,\max} - V_{Zyl}(t) - V_{Gas}(t)$$

$$(5) \qquad V_{Gas}(t) = \frac{m_{Gas,0} R_{Gas} T_{Akt}(t)}{P_{Akt}(t)}$$

mit $R_{Gas}$: Spezifische Gaskonstante

**4.** Verfahren nach einem der Ansprüche 1 bis 3,
bei dem der Arbeitskoben eine Zylinderform aufweist und $V_{Zyl}(t)$ durch folgenden Zusammenhang ermittelt wird:

$$(6) \qquad V_{Zyl}(t) = \pi r^2 x_{Zyl}(t)$$

mit

　　r: Zylinderradius des Arbeitskobens
　　x: Position des Arbeitskobens, wobei gilt wenn x(t) = 0 dann $V_{Zyl}(t) = 0$

**5.** Verfahren nach einem der Ansprüche 2 bis 4
bei dem das Ermitteln des Leckvolumenstroms $\dot{V}_{Leck}$ auf folgendem Zusammenhang basiert:

$$(7) \qquad \dot{V}_{Leck}(t) = \dot{V}_{Zyl}(t) + \dot{V}_{Gas}(t)$$

wobei gilt: $\dot{V}_{Flüss}(t) = 0$, $\dot{m}_{Flüss} = 0$, $\dot{m}_{Gas} = 0$ und $\dot{V}_{Akt,\max}(t) = 0$, mit

　　$\dot{m}_{Flüss}$: zeitliche Änderung der Masse des im Aktorinnenvolumen enthaltenen flüssigen Mediums
　　$\dot{m}_{Gas}$: zeitliche Änderung der Masse des im Aktorinnenvolumen enthaltenen gasförmigen Mediums.

**6.** Verfahren nach einem der Ansprüche 2 bis 5,
bei dem das Ermitteln eines Gasvolumenstroms $\dot{V}_{Gas}$, bei einem idealen Gas als gasförmiges Medium, auf folgendem Zusammenhang basiert:

$$(8) \qquad \dot{V}_{Gas}(t) = \frac{P_{Akt}(t) m_{Gas,0} R_{Gas} \dot{T}_{Akt}(t) - m_{Gas,0} R_{Gas} T_{Akt}(t) \dot{P}_{Akt}(t)}{P_{Akt}(t)^2}$$

**7.** Verfahren nach einem der Ansprüche 1 bis 6,
bei dem der Druck $P_{Akt}(t)$ und/oder die Temperatur $T_{Akt}(t)$ mittels Sensoren gemessen werden.

**8.** Verfahren nach einem der Ansprüche 1 bis 7,
bei dem der Druck $P_{Akt}(t)$ und/oder die Temperatur $T_{Akt}(t)$ mittels eines Zustandsschätzers auf Basis folgender gemessener Parameter ermittelt werden:

　　- elektrische Stromaufnahme $I_{Mot}(t)$ des elektrischen Antriebs, und/oder
　　- Temperatur $T_{Mot}(t)$ des elektrischen Antriebs, und/oder
　　- Last $L_{Mot}(t)$ des elektrischen Antriebs, und/oder
　　- Last $L_{Zyl}(t)$ am Arbeitskolben.

**9.** Vorrichtung zur Zustandsüberwachung eines elektromechanischen Aktors, der einen elektrischen Antrieb aufweist, mittels dem ein Arbeitskolben verfahrbar ist, wobei

　　- das Verfahren des Arbeitskolbens ein abgeschlossenes Aktorinnenvolumen $V_{Akt}(t)$ ändert, wobei gilt:

$$(1) \qquad V_{Akt}(t) = V_{Akt,max} - V_{Zyl}(t)$$

$$(2) \qquad V_{Zyl}(t) < V_{Akt,max},$$

mit

$V_{Akt,max}$: maximales Aktorinnenvolumen
$V_{Zyl}(t)$: Volumen $V_{Zyl}(t)$ des aktuell in das maximale Aktorinnenvolumen $V_{Akt,max}$ ragenden Teils des Arbeitskolbens, und

- das Aktorinnenvolumen $V_{Akt,max}$ zusätzlich mit einem gasförmigen Medium der Masse $m_{Gas,0}$ sowie einem flüssigen Medium der Masse $m_{FLüss,0}$ befüllt ist, wobei das gasförmige Medium ein aktuelles Volumen $V_{Gas}(t)$ und das flüssige Medium ein aktuelles Volumen $V_{Flüss}(t)$ einnimmt, wobei gilt:

$$(3) \qquad V_{Akt,max} = V_{Zyl}(t) + V_{Gas}(t) + V_{Flüss}(t)$$

umfassend:

- ein erstes Mittel (201) zum Ermitteln eines Drucks $P_{Akt}(t)$ und einer Temperatur $T_{Akt}(t)$ für das Aktorinnenvolumen $V_{Akt}(t)$,
- ein zweites Mittel (202), mit dem basierend auf dem Druck $P_{Akt}(t)$ und der Temperatur $T_{Akt}(t)$ und unter der Annahme, dass weder ein Gas- noch ein Flüssigkeitsleck im Aktor vorliegt, das aktuelle Volumen $V_{Flüss}(t)$ des flüssigen Mediums im Aktorinnenvolumen als $VG_{Flüss}(t)$ geschätzt wird, wobei gilt: $VG_{Flüss}(t)$ = $V_{Akt,max}(t) - V_{Zyl}(t) - V_{Gas}(t)$,
- eine erste Schnittstelle (203) zum Vorgeben einer ersten Bedingung B1 für das Volumen $VG_{Flüss}(t)$, und
- ein drittes Mittel (204), mit dem sofern das Volumen $VG_{Flüss}(t)$ Bedingung B1 nicht erfüllt, eine Warnung ausgegeben wird.

10. Vorrichtung nach Anspruch 9,
weiterhin umfassend:

- ein viertes Mittel (205) zum Ermitteln eines Leckvolumenstroms $\dot{V}_{Leck}$ basierend auf dem ermittelten Druck $P_{Akt}(t)$ und der ermittelten Temperatur $T_{Akt}(t)$ und unter der Annahme, dass weder ein Gas- noch ein Flüssigkeitsleck im Aktor vorliegt, wobei gilt:

$$(4) \qquad \dot{V}_{Leck}(t) = \dot{V}_{Gas}(t) + \dot{V}_{Flüss}(t) + \dot{V}_{Zyl(t)} - \dot{V}_{Akt,max},$$

- eine zweite Schnittstelle (206) zum Vorgeben einer zweiten Bedingung B2 für den Leckvolumenstrom $\dot{V}_{Leck}(t)$, und
- ein fünftes Mittel (207), mit dem sofern der Leckvolumenstrom $\dot{V}_{Leck}(t)$ die zweite Bedingung B2 nicht erfüllt, eine Warnung ausgegeben wird.

11. Computer-Programm-Produkt mit auf einem maschinenlesbaren Träger gespeichertem Programmcode zur Durchführung des Verfahrens nach einem der Ansprüche 1 bis 8, wenn der Programmcode auf einer Datenverarbeitungsvorrichtung ausgeführt wird.

12. Computersystem mit einer Datenverarbeitungsvorrichtung, wobei die Datenverarbeitungsvorrichtung derart ausgestaltet ist, dass ein Verfahren nach einem der Ansprüche 1 bis 8 auf der Datenverarbeitungsvorrichtung ausgeführt wird.

**Claims**

1. Method for monitoring the status of an electromechanical actuator which has an electrical drive by means of which a working piston can be moved, wherein

- the movement of the working piston changes a closed actuator internal volume $V_{Akt}(t)$, wherein it holds that:

$$(1) \quad V_{Akt}(t) = V_{Akt,max} - V_{Zyl}(t)$$

where

$$(2) \quad V_{Zyl}(t) < V_{Akt,max},$$

where

$V_{Akt,max}$: maximum actuator internal volume
$V_{Zyl}(t)$ : volume $V_{Zyl}(t)$ of the part of the working piston currently projecting into the maximum actuator internal volume $V_{Akt,max}$ and

- the actuator internal volume $V_{Akt,max}$ is additionally filled with a gaseous medium having the mass $m_{Gas,0}$ and a liquid medium having the mass $m_{Flüss,0}$, wherein the gaseous medium occupies a current volume $V_{Gas}(t)$ and the liquid medium occupies a current volume $V_{Flüss}(t)$, wherein it holds that:

$$(3) \quad V_{Akt,max} = V_{Zyl}(t) + V_{Gas}(t) + V_{Flüss}(t)$$

comprising the following steps:

- determining (101) a pressure $P_{Akt}(t)$ and a temperature $T_{Akt}(t)$ for the actuator internal volume $V_{Akt}(t)$,
- based on the pressure $P_{Akt}(t)$ and the temperature $T_{Akt}(t)$ and assuming that there is neither a gas nor a liquid leak in the actuator, estimating (102) the current volume $V_{Flüss}(t)$ of the liquid medium in the actuator internal volume as $VG_{Flüss}(t)$, wherein it holds that $VG_{Flüss}(t) = V_{Akt,max} - V_{Zyl}(t) - V_{Gas}(t)$,
- predefining (103) a first condition B1 for the volume $VG_{Flüss}(t)$ and
- if the volume $VG_{Flüss}(t)$ does not satisfy condition B1, outputting (104) a warning.

2.  The method according to claim 1, comprising the following steps:

- based on the determined pressure $P_{Akt}(t)$ and the determined temperature $T_{Akt}(t)$ and assuming that there is neither a gas nor a liquid leak in the actuator, determining a leakage volume flow $\dot{V}_{Leck}(t)$, wherein it holds that

$$(4) \quad \dot{V}_{Leck}(t) = \dot{V}_{Gas}(t) + \dot{V}_{Flüss}(t) + \dot{V}_{Zyl}(t) - \dot{V}_{Akt,max}$$

- predefining a second condition B2 for the leakage volume flow $\dot{V}_{Leck}(t)$ and
- if the leakage volume flow $\dot{V}_{Leck}(t)$ does not satisfy the second condition B2, outputting a warning.

3.  The method according to claim 1 or 2, wherein the estimate of $V_{Flüss}(t)$ in the case of an ideal gas as gaseous medium is based on the following relationship:

$$(4) \quad VG_{Flüss}(t) = V_{Akt,max} - V_{Zyl}(t) - V_{Gas}(t)$$

$$(5) \quad V_{Gas}(t) = V_{Gas}(t) = \frac{m_{gas,0} R_{Gas} T_{Akt}(t)}{P_{Akt}(t)}$$

where $R_{Gas}$: specific gas constant.

4.  The method according to one of claims 1 to 3, in which the working cylinder has a cylinder shape and $V_{Zyl}(t)$ is determined by the following relationship:

$$(6) \quad V_{Zyl}(t) = \pi r^2 x_{Zyl}(t)$$

where

r: cylinder radius of the working piston
x: position of the working piston, wherein when x(t) = 0, it then holds that $V_{Zyl}(t) = 0$.

5. The method according to one of claims 2 to 4, wherein the determination of the leakage volume flow $\dot{V}_{Leck}$ is based on the following relationship:

$$(7) \quad \dot{V}_{Leck}(t) = \dot{V}_{Zyl}(t) + \dot{V}_{Gas}(t)$$

wherein it holds that: $\dot{V}_{Flüss}(t) = 0$, $\dot{m}_{Flüss} = 0$, $\dot{m}_{Gas} = 0$ and $\dot{V}_{Akt,max}(t) = 0$, where

$\dot{m}_{Flüss}$ : is the time variation of the mass of the liquid medium contained in the actuator internal volume
$\dot{m}_{Gas}$ : is the time variation of the mass of the gaseous medium contained in the actuator internal volume.

6. The method according to one of claims 2 to 5, wherein the determination of a gas volume flow $\dot{V}_{Gas}$ in the case of an ideal gas as gaseous medium is based on the following relationship:

$$(8) \quad \dot{V}_{Gas}(t) = \frac{P_{Akt}(t)m_{Gas,0}R_{Gas}\dot{T}_{Akt}(t) - m_{Gas,0}R_{Gas}T_{Akt}(t)\dot{P}_{Akt}(t)}{P_{Akt}(t)^2}$$

7. The method according to one of claims 1 to 6, wherein the pressure $P_{Akt}(t)$ and/or the temperature $T_{Akt}(t)$ are measured by means of sensors.

8. The method according to one of claims 1 to 7, wherein the pressure $P_{Akt}(t)$ and/or the temperature $T_{Akt}(t)$ are determined by means of a status estimator based on the following measured parameters:

- electrical power consumption $I_{Mot}(t)$ of the electrical drive and/or
- temperature $T_{Mot}(t)$ of the electrical drive and/or
- load $L_{Mot}(t)$ of the electrical drive and/or
- load $L_{Zyl}(t)$ on the working piston.

9. Apparatus for monitoring the status of an electromechanical actuator which has an electrical drive by means of which a working piston can be moved, wherein

- the movement of the working piston changes a closed actuator internal volume $V_{Akt}(t)$, wherein it holds that:

$$(1) \quad V_{Akt}(t) = V_{Akt,max} - V_{Zyl}(t)$$

where

$$(2) \quad V_{Zyl}(t) < V_{Akt,max},$$

where

$V_{Akt,max}$: maximum actuator internal volume
$V_{Zyl}(t)$ : volume $V_{Zyl}(t)$ of the part of the working piston currently projecting into the maximum actuator internal volume $V_{Akt,max}$ and

- the actuator internal volume $V_{Akt,max}$ is additionally filled with a gaseous medium having the mass $m_{Gas,0}$ and a liquid medium having the mass $m_{Flüss,0}$, wherein the gaseous medium occupies a current volume $V_{Gas}(t)$ and the liquid medium occupies a current volume $V_{Flüss}(t)$, wherein it holds that:

$$(3) \quad V_{Akt,max} = V_{Zyl}(t) + V_{Gas}(t) + V_{Flüss}(t)$$

comprising:

- a first means (201) for determining a pressure $P_{Akt}(t)$ and a temperature $T_{Akt}(t)$ for the actuator internal volume $V_{Akt}(t)$,
- a second means (202) by means of which, based on the pressure $P_{Akt}(t)$ and the temperature $T_{Akt}(t)$ and assuming that there is neither a gas nor a liquid leak in the actuator, the current volume $V_{Flüss}(t)$ of the liquid medium in the actuator internal volume is estimated as $VG_{Flüss}(t)$, wherein it holds that $VG_{Flüss}(t) = V_{Akt,max} - V_{Zyl}(t) - V_{Gas}(t)$,
- a first interface (203) for predefining a first condition B1 for the volume $VG_{Flüss}(t)$ and
- a third means (204) by means of which if the volume $VG_{Flüss}(t)$ does not satisfy condition B1, a warning is output.

**10.** The apparatus according to claim 9, further comprising:

- a fourth means (205) for determining a leakage volume flow $\dot{V}_{Leck}$ based on the determined pressure $P_{Akt}(t)$ and the determined temperature $T_{Akt}(t)$ and assuming that there is neither a gas nor a liquid leak in the actuator, wherein it holds that

$$(4) \quad \dot{V}_{Leck}(t) = \dot{V}_{Gas}(t) + \dot{V}_{Flüss}(t) + \dot{V}_{Zyl}(t) - \dot{V}_{Akt,max}$$

- a second interface (206) for predefining a second condition B2 for the leakage volume flow $\dot{V}_{Leck}(t)$ and
- a fifth means (207) by means of which if the leakage volume flow $\dot{V}_{Leck}(t)$ does not satisfy the second condition B2, a warning is output.

**11.** A computer program product with program code stored on a machine-readable carrier for carrying out the method according to one of claims 1 to 8, if the program code is executed on a data processing device.

**12.** A computer system with a data processing device, wherein the data processing device is configured in such a manner that a method according to one of claims 1 to 8 is executed on the data processing device.

**Revendications**

**1.** Procédé, destiné à superviser l'état d'un actionneur électromécanique, qui comporte un entraînement électrique, au moyen duquel un piston de travail est déplaçable,

- le déplacement du piston de travail faisant varier un volume intérieur de l'actionneur $V_{Akt}(t)$, étant précisé que :

$$(1) \quad V_{Akt}(t) = V_{Akt,max} - V_{zyl}(t),$$

avec

$$(2) \quad V_{zyl}(t) < V_{Akt,max},$$

avec

$V_{Akt,max}$ : volume intérieur maximum de l'actionneur
$V_{Zyl}(t)$ : volume $V_{Zyl}(t)$ de la partie du piston de travail saillant actuellement dans le volume intérieur maximum de l'actionneur $V_{Akt,max}$, et

- le volume intérieur de l'actionneur $V_{Akt,max}$ étant rempli en supplément d'un milieu gazeux de masse $m_{Gas,0}$, ainsi que d'un milieu liquide de masse $m_{Flüss,0}$, le milieu gazeux occupant un volume actuel $V_{Gas}(t)$ et le milieu liquide occupant un volume actuel $V_{Flüss}(t)$, étant précisé que :

$$(3) \quad V_{Akt,max} = V_{zyl}(t) + V_{Gas}(t) + V_{Flüss}(t)$$

comprenant les étapes suivantes, consistant à :

- déterminer (101) une pression $P_{Akt}(t)$ et une température $T_{Akt}(t)$ pour le volume intérieur de l'actionneur $V_{Akt}(t)$,
- sur la base de la pression $P_{Akt}(t)$ et de la température $T_{Akt}(t)$ et en supposant que ni une fuite⁻ de gaz, ni une fuite de liquide ne soit présente dans l'actionneur, évaluer (102) le volume actuel $V_{Flüss}(t)$ du milieu liquide dans le volume intérieur de l'actionneur comme étant $VG_{Flüss}(t)$, étant précisé que : $VG_{Flüss}(t) = V_{Akt,max} - V_{zyl}(t) - VG_{as}(t)$
- prescrire (103) une première condition B1 pour le volume $VG_{Flüss}(t)$ et
- si le volume $VG_{Flüss}(t)$ ne satisfait pas à la condition B1, émettre (104) un avertissement.

2. Procédé selon la revendication 1, comportant les étapes suivantes, consistant à :

- sur la base de la pression $P_{Akt}(t)$ déterminée et de la température $T_{Akt}(t)$ déterminée et en supposant que ni une fuite de gaz, ni une fuite de liquide ne soit présente dans l'actionneur, déterminer un débit volumétrique de fuite $V_{Leck}(t)$, étant précisé que :

$$(4) \quad \dot{V}_{Leck}(t) = \dot{V}_{Gas}(t) + \dot{V}_{Flüss}(t) + \dot{V}_{Zyl}(t) - \dot{V}_{Akt,max}$$

- prescrire une deuxième condition B2 pour le débit volumétrique de fuite $V_{Leck}(t)$, et
- si le débit volumétrique de fuite $V_{Leck}(t)$ ne satisfait pas à la deuxième condition B2, émettre un avertissement.

3. Procédé selon la revendication 1 ou 2,
lors duquel, dans le cas d'un gaz idéal en tant que milieu gazeux, l'évaluation de $V_{Flüss}(t)$ est basée sur la relation suivante

$$(4) \quad VG_{Flüss}(t) = V_{Akt,max} - V_{Zyl}(t) - V_{Gas}(t)$$

$$(5) \quad V_{Gas}(t) = V_{Gas}(t) = \frac{m_{gas,0} R_{Gas} T_{Akt}(t)}{P_{Akt}(t)}$$

avec $R_{Gas}$ : constante spécifique du gaz.

4. Procédé selon l'une quelconque des revendications 1 à 3,
lors duquel le piston de travail est de forme cylindrique et $V_{zyl}(t)$ est déterminé par la relation suivante :

$$(6) \quad V_{Zyl}(t) = \pi r^2 x_{Zyl}(t)$$

avec

r : rayon de cylindre du piston de travail
x : position du piston de travail, étant précisé que si $x(t) = 0$, alors $V_{zyl}(t) = 0$.

5. Procédé selon l'une quelconque des revendications 2 à 4, lors duquel la détermination du débit volumétrique de fuite $V_{Leck}$ est basé sur la relation suivante :

$$(7) \qquad \dot{V}_{Leck}(t) = \dot{V}_{Zyl}(t) + \dot{V}_{Gas}(t)$$

étant précisé que : $\dot{V}_{Flüss}(t) = 0$, $\dot{m}_{Flüss} = 0$, $\dot{m}_{Gas} = 0$ et $\dot{V}_{Akt,max}(t) = 0$, avec

$m_{Flüss}$ : variation dans le temps de la masse du milieu liquide contenu dans le volume intérieur de l'actionneur
$m_{Gas}$ : variation dans le temps de la masse du milieu gazeux contenu dans le volume intérieur de l'actionneur.

**6.** Procédé selon l'une quelconque des revendications 2 à 5,
lors duquel, dans le cas d'un gaz idéal en tant que milieu gazeux, la détermination d'un débit volumétrique gazeux $V_{Gas}$ est basée sur la relation suivante :

$$(8) \qquad \dot{V}_{Gas}(t) = \frac{P_{Akt}(t)m_{Gas,0}R_{Gas}\dot{T}_{Akt}(t) - m_{Gas,0}R_{Gas}T_{Akt}(t)\dot{P}_{Akt}(t)}{P_{Akt}(t)^2}$$

**7.** Procédé selon l'une quelconque des revendications 1 à 6,
lors duquel la pression $P_{Akt}(t)$ et/ou la température $T_{Akt}(t)$ sont mesurées au moyen de capteurs.

**8.** Procédé selon l'une quelconque des revendications 1 à 7,
lors duquel la pression $P_{Akt}(t)$ et/ou la température $T_{Akt}(t)$ sont déterminées au moyen d'un évaluateur d'état sur la base des paramètres mesurés suivants :

- consommation électrique $I_{Mot}(t)$ de l'entraînement électrique, et/ou
- température $T_{Akt}(t)$ de l'entraînement électrique, et/ou
- charge $L_{Mot}(t)$ de l'entraînement électrique, et/ou
- charge $L_{Zyl}(t)$ sur le piston de travail.

**9.** Dispositif, destiné à superviser l'état d'un actionneur électromécanique, qui comporte un entraînement électrique, au moyen duquel un piston de travail est déplaçable,

- le déplacement du piston de travail faisant varier un volume intérieur de l'actionneur $V_{Akt}(t)$, étant précisé que :

$$(1) \quad V_{Akt}(t) = V_{Akt,max} - V_{Zyl}(t),$$

avec

$$(2) \quad V_{Zyl}(t) < V_{Akt,max},$$

avec

$V_{Akt,max}$ : volume intérieur maximum de l'actionneur
$V_{Zyl}(t)$ : volume $V_{Zyl}(t)$ de la partie du piston de travail saillant actuellement dans le volume intérieur maximum de l'actionneur $V_{Akt,max}$, et

- le volume intérieur de l'actionneur $V_{Akt,max}$ étant rempli en supplément d'un milieu gazeux de masse $m_{Gas,0}$, ainsi que d'un milieu liquide de masse $m_{Flüss,0}$, le milieu gazeux occupant un volume actuel $V_{Gas}(t)$ et le milieu liquide occupant un volume actuel $V_{Flüss}(t)$, étant précisé que :

$$(3) \quad V_{Akt,max} = V_{Zyl}(t) + V_{Gas}(t) + V_{Flüss}(t)$$

comprenant :

- un premier moyen (201), destiné à déterminer une pression $P_{Akt}(t)$ et une température $T_{Akt}(t)$ pour le volume intérieur de l'actionneur $V_{Akt(t)}$,

- un deuxième moyen (202), à l'aide duquel sur la base de la pression $P_{Akt}(t)$ et de la température $T_{Akt}(t)$ et en supposant que ni une fuite de gaz, ni une fuite de liquide ne soit présente dans l'actionneur, le volume actuel $V_{Flüss}(t)$ du milieu liquide dans le volume intérieur de l'actionneur est évalué en tant que $VG_{Flüss}(t)$, étant précisé que : $VG_{Flüss}(t) = V_{Akt,max} - V_{zyl}(t) - VG_{as}(t)$
- une première interface (203), destinée à prescrire une première condition B1 pour le volume $VG_{Flüss}(t)$, et
- un troisième moyen (204) à l'aide duquel est émis un avertissement, si le volume $VG_{Flüss}(t)$ ne satisfait pas à la condition B1.

10. Dispositif selon la revendication 9, comprenant par ailleurs :

- un quatrième moyen (205), destiné à déterminer un débit volumétrique de fuite $V_{Leck}(t)$ sur la base de la pression $P_{Akt}(t)$ déterminée et de la température $T_{Akt}(t)$ déterminée, et en supposant que ni une fuite de gaz, ni une fuite de liquide ne soit présente dans l'actionneur, étant précisé que :

$$(4) \qquad \dot{V}_{Leck}(t) = \dot{V}_{Gas}(t) + \dot{V}_{Flüss}(t) + \dot{V}_{Zyl}(t) - \dot{V}_{Akt,max}$$

- une deuxième interface (206), destinée à prescrire une deuxième condition B2 pour le débit volumétrique de fuite $V_{Leck}(t)$ et
- un cinquième moyen (207), à l'aide duquel est émis un avertissement si le débit volumétrique de fuite $V_{Leck}(t)$ ne satisfait pas à la deuxième condition B2.

11. Produit de programme informatique pourvu d'un code programme mémorisé sur un support lisible par machine, destiné à réaliser le procédé selon l'une quelconque des revendications 1 à 8, lorsque le code programme est exécuté sur un dispositif de traitement de données.

12. Système informatique, pourvu d'un dispositif de traitement de données, le dispositif de traitement de données étant conçu de sorte qu'un procédé selon l'une quelconque des revendications 1 à 8 puisse être réalisé sur le dispositif de traitement de données.

$V_{Akt}$

$V_{Zyl}(t)$

$V_{Gast}(t)$

$x_{Zyl}(t)$

$V_{Flüss}(t)$

Fig. 1

Fig. 2

201

$P_{Akt}(t), T_{Akt}(t)$

205

202

203

204

206

207

B1

B2

Warnung          Warnung

Fig. 3

**EP 3 115 763 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10355250 A1

- US 5744701 A